# EUROPEAN PATENT SPECIFICATION

(11) **EP 3 004 917 B1**
(45) Date of publication and mention of the grant of the patent: **17.05.2017**
(21) Application number: 14739562.8
(22) Date of filing: 25.05.2014
(51) Int. Cl.: G01S 7/00, G01S 7/02

(54) **SYSTEM, METHOD AND NETWORK FOR EMITTER DETECTION**
SYSTEM, VERFAHREN UND NETZWERK ZUR EMITTERERKENNUNG
SYSTÈME, PROCÉDÉ ET RÉSEAU POUR UNE DÉTECTION D'ÉMETTEUR

(30) Priority: 28.05.2013 IL 22660013
(43) Date of publication of application: 13.04.2016
(73) Proprietor: Elbit Systems EW And Sigint - Elisra Ltd., 51217 Bnei Barak (IL)
(72) Inventor: BARKAN, Uri, 5121701 Bnei Barak (IL)
(74) Representative: Schuhmann, Albrecht
(86) International application number: PCT/IL2014/050469
(87) International publication number: WO 2014/191988

(56) References cited:
- US-A1- 2003 169 202
- US-A1- 2005 052 315
- US-A1- 2006 258 296
- US-A1- 2007 211 834

## Description

### FIELD OF THE DISCLOSED TECHNIQUE

The disclosed technique relates to receivers, in general and to methods and systems for emitter detection, in particular.

### BACKGROUND OF THE DISCLOSED TECHNIQUE

In some applications, electromagnetic radiation receivers (e.g., radio receivers or microwave receivers) are employed to detect the presence of electromagnetic radiation emitters such as radars or radio transmitters. Electromagnetic radiation emitted by an emitter is referred to herein as an electromagnetic signal. A receiver detects an electromagnetic signal when the Signal to Noise Ratio of the received signal is larger than larger than a detection threshold. Prior knowledge of characteristics relating to the electromagnetic signal (e.g. frequency) may help improve the detection capabilities of the receiver.

U.S. Patent Application Publication 2006/0258296 to Steer et al, entitled "Method and System for Detecting Radar Signals", directs to a communication system operating in an environment and frequency band in which radar systems also operate. Such a communication system is required to stop using the channels in which the radar system operates when detecting that the radar system uses these channels. In the first stage, the system receives signals and generates pulses. In the second stage, the system classifies the received pulses as originating from either a radar or from other systems. When the system identifies that the received pulses originated form a radar system, the system shall stop using the channels in which these pulses were received. To classify the pulses the system employs a bank of known radar pulse, the low autocorrelation property of radar pulses, inspects headers or pulse durations.

In U.S. Patent Application Publication 2007/211834, systems and methods are provided for dynamically analyzing radar pulses at a receiver. A digital signal is provided to an amplitude detector. At least one digital waveform representing an emitter pulse is identified at the amplitude detector. A matched filter associated with the emitter is generated, comprising at least one characteristic of the identified digital waveform.

### SUMMARY OF THE PRESENT DISCLOSED TECHNIQUE

It is an object of the disclosed technique to provide a novel network method and system for emitter detection.

In accordance with the disclosed technique, there is thus provided a system for detecting an emitter in accordance with claim 1.

In accordance with another aspect of the disclosed technique, there is thus provided a method detecting an emitter in accordance with claim 16.

### BRIEF DESCRIPTION OF THE DRAWINGS

The disclosed technique will be understood and appreciated more fully from the following detailed description taken in conjunction with the drawings in which:
Figure 1 is a schematic illustration of and exemplary receiver systems network, constructed and operative in accordance with an embodiment of the disclosed technique;
Figure 2 is a schematic illustration of a receiver system, constructed and operative in accordance with an embodiment of the disclosed technique.
Figure 3 is a schematic illustration of a receiver system, constructed and operative in accordance with a further embodiment of the disclosed technique;
Figure 4, is a schematic illustration of a passive radar receiver system for electronic warfare, constructed and operative in accordance with another embodiment of the disclosed technique; and
Figure 5 is a schematic illustration of a method for collaborative detection of an emitter by a receiver systems network including a plurality of receiver systems, in accordance with a further embodiment of the disclosed technique.

### DETAILED DESCRIPTION OF THE EMBODIMENTS

The disclosed technique overcomes the disadvantages of the prior art by providing a receiver system which may communicate with other receiver systems, thus forming a receiver systems network. Each receiver system in the receiver systems network receives from other receivers systems signal characteristics relating to electromagnetic signals transmitted by an emitter or emitters (e.g., radar transmitters or communication transmitters). The receiver system according to the disclosed technique employs the stored signal characteristics relating to the emitter or emitters to detect received signals in real-time. Furthermore, the receiver system according to the disclosed technique may store signal samples, relating to signals which were not detected in real-time and attempt to detect these undetected signals with the stored signal characteristics (i.e., previously stored or newly received) at a later time. The receiver system according to the disclosed may be employed for passive radar signal detection in an electronic warfare (e.g., signal intelligence) system or for communication signal detection.

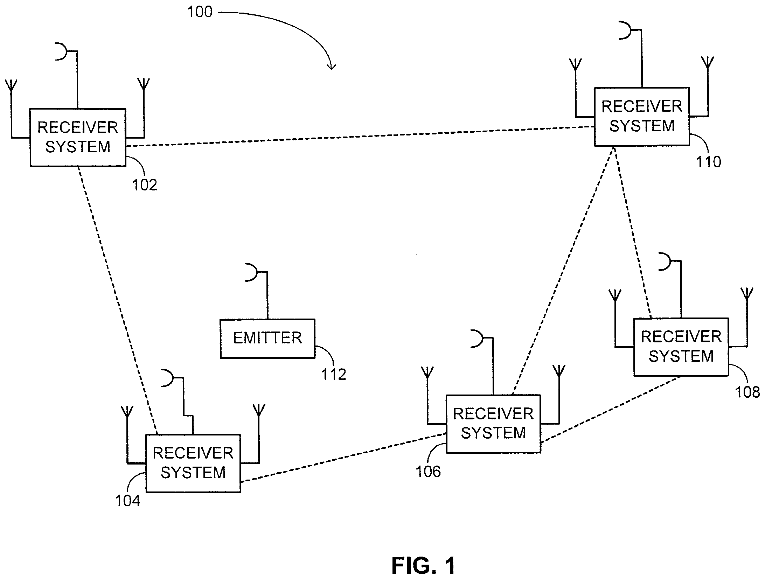

Reference is now made to Figure 1, which is a schematic illustration of and exemplary system for emitter detection, generally referenced 100, constructed and operative in accordance with an embodiment of the disclosed technique. System 100 includes a network of five receiver systems 102, 104, 106, 108 and 110. Receiver 102 communicates with receiver 104 and with receiver 110. Receiver 104 communicates with receiver 102 and with receiver 106. Receiver 106 communicates with receiver 104, receiver 108 and with receiver 110. Receiver 108 communicates with receiver 106 and with receiver 110. Receiver 110 communicates with receiver 106, with receiver 108 and with receiver 102.

Receiver systems 102, 104, 106, 108 and 110 in systems 100 may form a wireless sensor network collaborating to detect a signal emitted by emitter 112 and determine the signal characteristics relating thereto (i.e., relating to the radio signal transmitted by emitter 112). Receiver systems 102, 104, 106, 108 and 110 in systems 100 may further collaborate to determine properties relating to emitter 112. These properties may be, the existence of emitter 112, the type of emitter 112 (e.g., radar emitter or a communications emitter) and the location properties of emitter 112 (e.g., location, velocity or acceleration). For example, in electronic warfare scenarios these properties are referred to as warning, identification geolocalization and display.

In Figure 1, receiver system 104 receives signals emitted by emitter 112 with sufficient Signal-to-Noise Ratio (SNR) to detect the signals emitted by emitter 112. However, receiver systems 102 and 106 are either, further away from emitter 112 or the sensitivity thereof is lower than receiver system 104. Thus, receiver systems 102 and 106 might not receive the signal emitted by emitter 112 with sufficient SNR to be able to detect the signals emitted by emitter 112. However, receiver systems 102 and 106 store the signal samples of the received signals thereby. Once receiver systems 104 determines the various signal characteristics relating to the electromagnetic signal emitted by emitter 112, receiver system 104 transmits these signal characteristics to receiver systems 102, 106, 108 and 110. In other words, receiver system 104 distributes the detected signal characteristics to receiver systems 102, 106, 108 and 110 (i.e., the other receiver systems in the network). Receiver systems 102 and 106 receive and store these signal characteristics. Thereafter, receiver systems 102 and 106 can attempt to detect the signal emitted by emitter 112, from the signal samples which were previously stored therein, employing the stored signal characteristics (i.e., either newly received or previously stored). Distributing the detected signal characteristics determined by each of receiver systems 102, 104, 106, 108 and 110, increases the probability that receiver systems in receiver systems network 100 would detect the signal emitted by emitter 112 (i.e., incase these receiver systems where not previously able to detect the signal emitted by emitter 112).

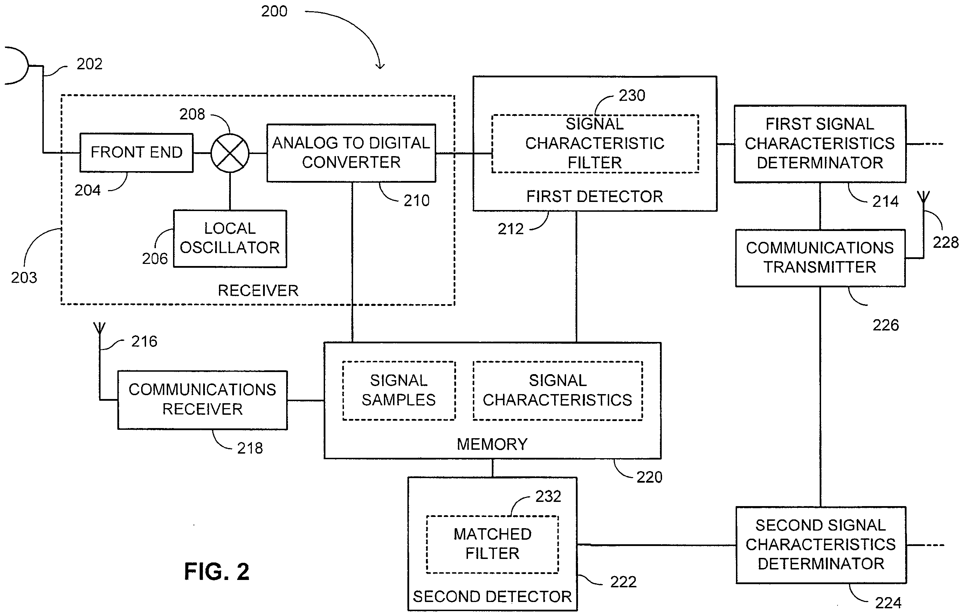

Reference is now made to Figure 2, which is a schematic illustration of a receiver system, generally referenced 200, constructed and operative in accordance with an embodiment of the disclosed technique. Receiver system 200 may operate within a system such as receiver systems network 100 (Figure 1). Receiver system 200 includes a receiver antenna 202, a receiver 203, a first detector 212 and a first signal characteristics determinator 214. System 200 further includes a receiving communications antenna 216, a communications receiver 218, a memory 220, a second detector 222 and a second signal characteristics determinator 224. System 200 also includes a communications transmitter 226 and a transmitting communications antenna 228. Receiver 203 includes a front end 204, a local oscillator 206, a mixer 208, an analog to digital converter 210. First detector 212 includes a signal characteristic filter 230. Second detector 230 includes a matched filter 232. Memory 220 stores therein signal samples and signal characteristics as further explained below.

Front end 204 is coupled with receiver antenna 202 and with mixer 208. Mixer 208 is further coupled with local oscillator 206. Analog to digital converter 210 is coupled with mixer 208, memory 220 and first detector 212. First detector 212 is further coupled with memory 220. First signal characteristics determinator 214 is coupled with first detector 212 and with communication transmitter 226. Communication receiver 218 is coupled with receiving communications antenna 216 and with memory 220. Second detector 222 is coupled with memory 220 and with second signal characteristics determinator 224. Second signal characteristics determinator 224 is further coupled with communications transmitter 226. First signal characteristics determinator 214 and second signal characteristics determinator 224 are optionally coupled (not shown) with memory 220.

Receiver antenna 202 receives electromagnetic radiation. This electromagnetic radiation includes electromagnetic radiation emitted by an emitter or emitters (not shown) as well as ambient electromagnetic radiation. Receiver antenna transforms the electromagnetic radiation into an electric received signal and provides the received signal to front end 204. Front end 204 amplifies and optionally filters the received signal and provides the amplified and filtered signal to mixer 208. Mixer 208 multiplies the amplified and filtered signal with a reference signal generated by local oscillator 206 to down convert the frequency of the amplified and filtered. Mixer 208 provides the down converted signal to analog to digital converter 210. Analog to digital converter 210 samples the down converted signal and provides signal samples (i.e., a plurality of samples representing the signal) to first detector 212. It is noted that the embodiment of receiver 203 described herein above is brought herein as an example only. Receiver 203 may alternatively include a direct sampler (not shown) coupled with receiver antenna directly sampling the electric received signal. The direct sampler may further be coupled directly with first detector 212 or via a software radio (also not shown) which performs, for example, filtering, amplification and down conversion.

The signal samples provided to first detector 212 may represent a noisy sampled signal. In other words, the signal samples relates the electromagnetic signal emitted by and emitter, as well as to noise originating from electromagnetic signals received from other emitters, from ambient electromagnetic radiation or noise originating from the receiver circuitry. It is noted that the terms 'signal samples' and 'sampled signal' are used herein interchangeably.

First detector 212 attempts to detect a signal relating to an emitter from the noisy sampled signal provided thereto. Generally, a detector detects a signal when the energy of the signal is larger than the energy of the noise by a determined margin. In other words, a detector detects a signal when the SNR is larger than a detection threshold. Accordingly, first detector 212 attempts to increase the energy of the signal samples related to an emitter or to reduce the energy of the signal samples related to the noise, as further explained below (i.e., to increase the signal-to-noise ratio). First detector 212 may employ previously stored signal characteristics as further explained below. First detector 212 provides the detected signal thereby to first signal characteristics determinator 214.

First signal characteristics determinator 214 determine various signal characteristics relating to the detected signal. These various signal characteristics may be new signal characteristics (i.e., signal characteristics that were not previously stored in memory 220) or a refinement of previously stored signal characteristics (e.g., with a higher degree of accuracy). These signal characteristics are for example, the frequency or phase of the signal. When the signal is a pulse or a sequence of pulses, these signal characteristics may further be a matched filter mask, the pulse width, the intra-pulse modulation scheme (e.g., intra-pulse frequency modulation, intra-pulse phase modulation or intra-pulse amplitude modulation), inter-pulse modulation scheme (e.g., pulse position modulation), Pulse Repetition interval (PRI), scan repetition interval and the like. As mentioned above, first detector 212 may employ several known signal characteristics while first signal characteristics determinator 214 shall attempt to determine other unknown signal characteristics. For example, the matched filter mask may be known and employed by first detector 212, but the PRI is unknown and thus may be determined by first signal characteristics determinator 214. As a further example, when refining previously stored signal characteristics, if the frequency is known with a certain degree of accuracy, first signal characteristics determinator 214 may further determine the frequency of the received signal with a higher degree of accuracy. First signal characteristics determinator 214 provides the determined signal characteristics to communications transmitter 226. Communications transmitter 226 transmits, via communications antenna 228, a least a selected portion of the determined signals characteristics to other receiver systems (e.g., only the newly determined signal characteristics are transmitted or only the newly determined and the refined signal characteristics are transmitted). Optionally, first signal characteristics determinator 214 may store the determined signal characteristics in memory 220 and employ these signal characteristics for detection.

As mentioned above, first detector 212 attempts to increase the signal-to-noise (SNR) ratio of the noisy sampled signal. To that end, first detector employs signal characteristic filter 230. Signal characteristic filter 230 is for example a matched filter, which increases the SNR of the noisy sampled signal by correlating the noisy sampled signal with a mask or a template of the signal to be detected. This template includes for example, the frequency of the transmitted signal, the phase of the transmitted signal and the pulse width of the transmitted signal. When Signal characteristic filter 230 is a matched filter, signal characteristic filter 230 employs a 20 matched filter mask or masks, stored in memory 220 and attempts to detect the signal. Signal characteristic filter 230 uses a pre-selected matched filter mask (e.g., determined by intelligence or specified by a user) or employs a plurality of matched filter masks and selects the mask yielding the best SNR. Signal characteristic filter 230 may also employ other signal characteristics, stored in memory 220, to improve the SNR. For example, when the frequency of the emitted electromagnetic signal is known, Signal characteristic filter 230 may filter the noisy sampled signal to include samples relating to a signal or signals exhibiting a frequency within a narrow frequency range, thus reducing the noise. Similarly, signal characteristic filter 230 may filter the noisy sampled signal to include samples relating to a signal or signals, which exhibit a specific pulse width or PRI.

In some case, first detector 212 cannot detect the presence of a signal in the noisy sampled signal. In such cases, system 200 does not discard signal samples relating to the un-detected signal, but rather first detector 212 stores these un-detected noisy sampled signals in memory 220 for processing at a later time (e.g., seconds later, minutes later or even days later) as further explained below. Alternatively, analog to digital converter 210 stores all the sampled noisy signals in memory 220.

Communication receiver 218 receives, via receiving communication antenna 216, information relating to signal characteristics relating to emitters. The information relating to the signal characteristics is received from other receiver systems (not shown) with which system 200 communicates. Receiver 218 may also receive information relating to signal characteristics from other sources, such as central control station of the receiver system network. Communications receiver 218 stores the received signal characteristics in memory 220. Furthermore, a user may store in memory 220 the information relating to the signal characteristics via a user interface (not shown). Alternatively, the information relating to the signal characteristics may be uploaded to memory 220 from other memory devices (also not shown) such as CD's, Flash memory devices (e.g., disk-no-keys), magnetic tapes, hard drives and the like.

Second detector 222 attempts to a signal relating to an emitter from stored noisy sampled signal, which first detector 212 did not detect. To that end, when new signal characteristics are stored in memory 220, second detector 222 attempts to detect a signal relating to an emitter from the stored noisy sampled signals, employing the new signal characteristics. Second detector 222 provides the detected signal thereby to second signal characteristics determinator 224. Second signal characteristics determinator 224 determine various signal characteristics relating to the detected signal. Second signal characteristics determinator 224 provides the determined signal characteristics to communications transmitter 226. Communications transmitter 226 may transmit, via communications antenna 228, the determined signals characteristics to other receiver systems. Optionally, second signal characteristics determinator 224 may store the determined signal characteristics in memory 220.

It is noted that second detector 222 and second signal characteristics determinator 224 may be omitted from system 200. In such a case, first detector 212 attempts to detect a signal from the stored noisy sampled signal which were not previously detected thereby and first signal characteristics determinator 214 determines the signal characteristics of the detected signal (i.e., detected from the stored noisy sampled signal which first detector 212 did not previously detect). Furthermore, receiver 203 may be coupled with one antenna, while communication receiver 218 and communication transmitter 226 are coupled with another respective communications antenna for transmitting and receiving communication signals. Also, receiver 203, communication receiver 218 and communication transmitter 226 may all be coupled with a single antenna as further explained below. Additionally, both communication receiver 218 and communication transmitter 226 may be embodied as a single transceiver. Additionally, communications transmitter 226 and communications receiver 218 may be external to system 200 and serve other systems as well.

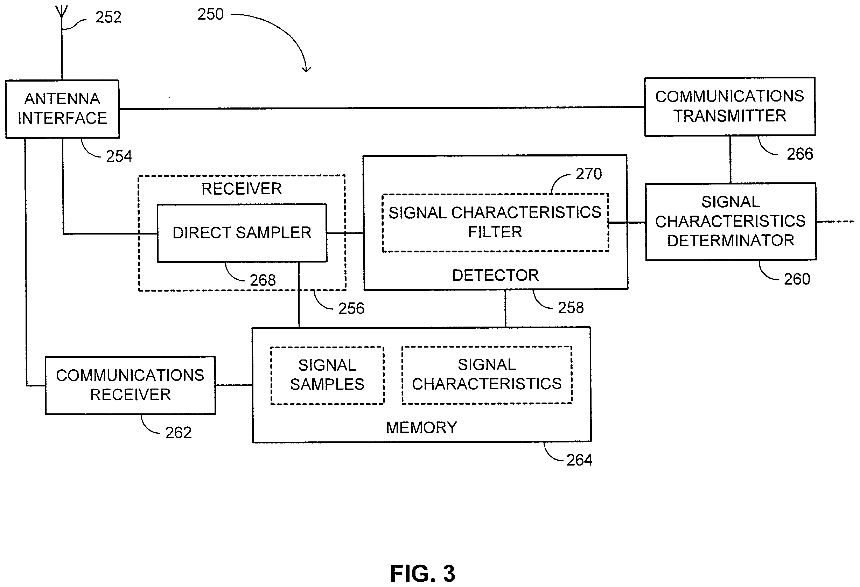

Reference is now made to Figure 3, which is a schematic illustration of a receiver system, generally referenced 250, constructed and operative in accordance with a further embodiment of the disclosed technique. Receiver system 250 may operate within a receiver systems network such as receiver systems network 100 (Figure 1). System 250 includes an antenna 252, an antenna interface 254, a receiver 256, a detector 258 and a signal characteristics determinator 260. System 200 further includes a communications receiver 262, a memory 264 and a communications transmitter 266. Receiver 254 includes a direct sampler 268 and signal and detector 258 includes a signal characteristics filter 270. Memory 220 stores therein signal samples and signal characteristics similar to as explained above. Antenna interface 254 controls the usage of antenna 252 by each one of receiver 254, communication receiver 262 and communication transmitter 266.

Antenna 252 is coupled with antenna interface 254. Receiver 256 is coupled with antenna interface 254, with detector 258 and with memory 264. Detector 258 is further coupled with memory 264 and with signal characteristics determinator 260. Signal characteristics determinator 260 is further coupled with communication transmitter 266. Communication transmitter 266 is further coupled with antenna interface 254. Communication receiver 262 is coupled with antenna interface 254 and with memory 264. Signal characteristics determinator 266 is optionally coupled (not shown) with memory 264.

Antenna interface 254 may be embodied as a switch, which periodically couples each one receiver 256, communication receiver 262 and communication transmitter 266 to antenna 252 for a predetermined period of time. Alternatively, antenna interface 254 may couple antenna 252 with each one of receiver 256, communication receiver 262 and communication transmitter 266 according to demand. In yet another alternative, antenna interface may be embodied as an antenna diplexer designating different sections of the antenna bandwidth for either one of receiver 256, communication receiver 262 and communication transmitter 266.

Antenna 252 receives electromagnetic radiation emitted by an emitter or emitters (not shown) as well as ambient electromagnetic radiation, and transforms this electromagnetic radiation into an electric received signal. Receiver antenna 252 provides the received signal to direct sampler 268. Direct sampler 268 samples the received signal and provides signal samples (i.e., a plurality of samples representing the signal) to detector 258. Similar to as mentioned above, the signal samples provided to detector 258 may represent a noisy sampled signal.

In general, detector 258 attempts to detect a signal relating to an emitter form either real-time received signal samples or previously acquired signal samples (i.e., signal samples stored in memory which were either received or uploaded to the memory). Similar to first detector 212 (Figure 2), detector 258 attempts to detect a signal relating to an emitter from the noisy sampled signal provided thereto. Accordingly, detector 258 attempts to increase the energy of the signal samples related to an emitter or to reduce the energy related to the noise, as further explained below (i.e., to increase the signal-to-noise ratio of the signal) by employing previously stored signal characteristics in memory 264. Detector 258 provides the detected signal thereby to signal characteristics determinator 260. Signal characteristics determinator 260 determine various signal characteristics relating to the detected signal as mentioned above. These various signal characteristics may be new signal characteristics or a refinement of previously stored signal characteristics. Signal characteristics determinator 260 provides the determined signal characteristics to communications transmitter 266 and optionally stores the determined signal characteristics in memory 264. Communications transmitter 266 transmits, via antenna 252, at least a selected portion of the determined signals characteristics to other receiver systems.

Similar to first detector 212, detector 258 attempts to increase the signal-to-noise (SNR) ratio of the noisy sampled signal by employing various signal characteristics. Detector 258 may employ signal characteristics stored in memory 264 to improve the SNR as mentioned above with reference to first detector 212 (Figure 2). To that end, detector employs a signal characteristics filter 270. Similar to signal characteristic filter 230, signal characteristics filter 270 may be a matched filter or employ other signal characteristics, stored in memory 220, to improve the SNR. Once detector 258 detects a signal, detector 258 provides the detected signal samples to signal characteristics determinator 260. In some cases, detector 258 cannot detect the presence of a signal in the noisy sampled signal. In such cases, system 250 does not discard signal samples relating to the un-detected signal, but rather, detector 258 stores these un-detected noisy sampled signals in memory 264 for processing at a later time (e.g., seconds later, minutes later or even days later). Alternatively, direct sampler 268 stores all the sampled noisy signals in memory 264.

Communication receiver 262 receives, via antenna 252, information relating to signal characteristics relating to emitters. The information relating to the signal characteristics is received from other receiver systems (not shown) with which system 250 communicates. Receiver 262 may also receive information relating to signal characteristics from other sources, such as central control station of the receiver system network. Communications receiver 262 stores the received signal characteristics in memory 264. Furthermore, a user may store in memory 262 the information relating to the signal characteristics via a user interface (not shown). Alternatively, the information relating to the signal characteristics may be uploaded to memory 264 from other memory devices (also not shown) such as CD's, Flash memory devices (e.g., disk-no-keys), magnetic tapes, hard drives and the like.

Detector 258 further attempts to detect a signal relating to an emitter from stored noisy sampled signal, which detector 258 did not previously detect. To that end, when new signal characteristics are stored in memory 264, detector 258 attempts to detect a signal relating to an emitter from the stored noisy sampled signals, employing the new signal characteristics. Once detector 258 detects a signal, detector 258 provides the detected signal thereby to signal characteristics determinator 260. Signal characteristics determinator 260 determine various signal characteristics relating to the detected signal. Signal characteristics determinator 260 may provide the determined signal characteristics to communications transmitter 226, which may transmit, via antenna 252, the determined signals characteristics to other receiver systems. It is noted that communications transmitter 266 and communications receiver 262 may be external to system 250 and serve other systems as well. It is also noted that any communications receiver 262 as well as communications receiver 218 (Figure 1) may be a wired receiver, a wireless receiver or a satellite receiver. Additionally, communications transmitter 266, as well as communications receiver 218 (Figure 2) and communications transmitter 228 (Figure 2) may each be a wired transmitter, a wireless transmitter or a satellite transmitter.

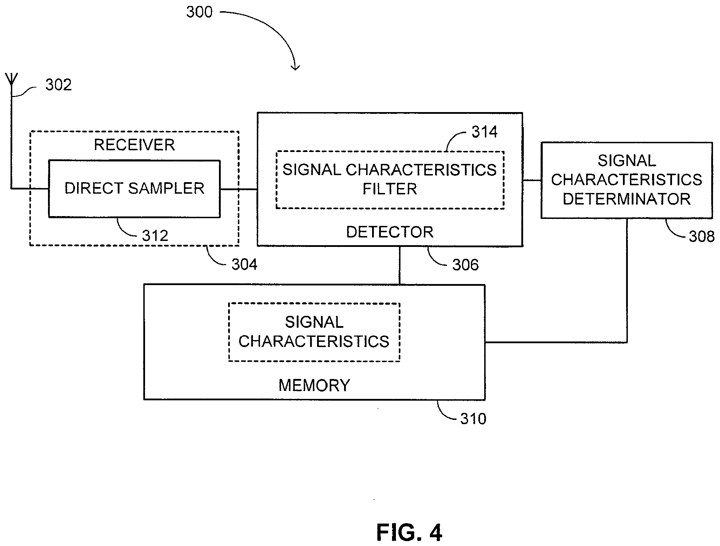

Reference is now made to Figure 4, which is a schematic illustration of a passive radar receiver system, generally referenced 300, constructed and operative in accordance with another embodiment of the disclosed technique. Receiver system 300 includes an antenna 302, a receiver 304, a detector 306, a signal characteristics determinator 308 and memory 310. Receiver 304 includes a direct sampler 312 and signal and detector 306 includes a signal characteristics filter 314. Memory 220 stores therein signal characteristics similar to as explained above.

Antenna 302 is coupled receiver 304. Detector 306 is coupled with receiver 304, with memory 310 and with signal characteristics determinator 308. Signal characteristics determinator 308 is further memory 310. Antenna 302 receives electromagnetic radiation emitted by an emitter or emitters (not shown) as well as ambient electromagnetic radiation, and transforms this electromagnetic radiation into an electric received signal. Antenna 302 provides the received signal to direct sampler 312. Direct sampler 312 samples the received signal and provides signal samples (i.e., a plurality of samples representing the signal) to detector 306. Similar to as mentioned above, the signal samples provided to detector 306 may represent a noisy sampled signal.

Similar to first detector 212 (Figure 2), detector 304 attempts to detect a signal relating to an emitter from the noisy sampled signal provided thereto. When the SNR or the received signal is sufficiently large, detector 306 may detect the signal relating to the emitter directly form the received signal samples. Detector 306 may further attempt to increase the energy of the signal samples related to an emitter or to reduce the energy related to the noise (i.e., to increase the signal-to-noise ratio of the signal) by employing previously stored signal characteristics in memory 310. Detector 306 provides the detected signal thereby to signal characteristics determinator 260.

When detector 306 detects a signal without the use of signal characteristics, signal characteristics determinator 308 determine at least one new signal characteristic relating to the radio signal transmitter by the emitter and stores these new determined signal characteristics in memory 310. Once the newly determined signal characteristics are stored in memory, signal characteristics filter 314 may employ these stored signal characteristics when detector 306 detects signals received at a later time, as described above. Alternatively, the information relating to the signal characteristics may be uploaded to memory 310 from other memory devices (also not shown) such as CD's, Flash memory devices (e.g., disk-no-keys), magnetic tapes, hard drives and the like. Thus, in general, detector 306 employs previously stored signal characteristics (i.e., either stored in memory 310 by signal characteristics determinator 308 or uploaded to memory 310) when detecting a signal.

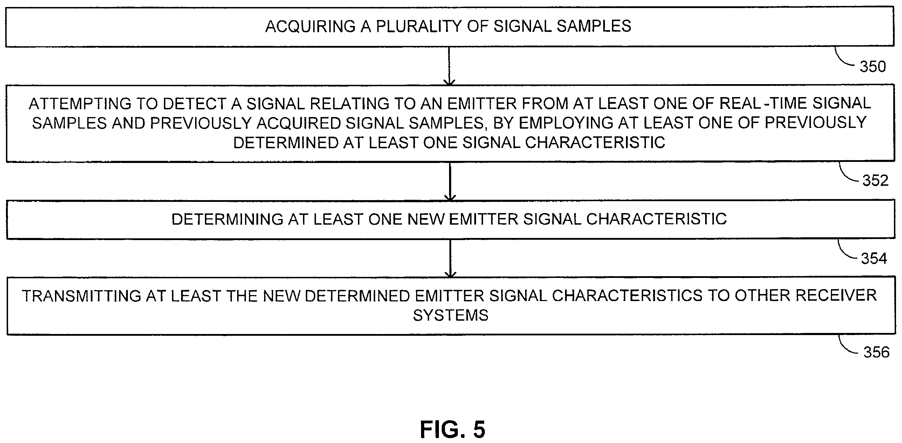

Reference is now made to Figure 5, which is a schematic illustration of a method for collaborative detection of an emitter by a receiver systems network including a plurality of receiver systems, in accordance with a further embodiment of the disclosed technique. The method is executed by at least two receiver systems in the receiver systems network. In step 350, a plurality of signal samples are acquired. These signal samples may include signals samples relating to emitters as well as signal samples relating to noise. With reference to Figure 2, analog to digital converter 220 acquires signal samples of signal received by system 200.

In step 352, an attempt to detect a signal relating to an emitter is made from at least one of real-time signal samples and previously acquired signal samples, by employing at least one of determined at least one signal characteristic. With reference to Figure 2, first detector 212 attempts to detect a signal relating to an emitter from real-time signal samples. Second detector 222 attempts to detect a signal relating to an emitter, from previously acquired signal samples.

In step 354, at leas one new emitter signal characteristics is determined. As mentioned above, these signal characteristics are for example the frequency or phase of the signal. When the signal is a pulse or a sequence of pulse, these signal characteristics may further be a matched filter mask of the signal, the pulse width, the intra-pulse modulation scheme (e.g., intra-pulse frequency modulation, intra-pulse phase modulation or intra-pulse amplitude modulation), inter-pulse modulation scheme (e.g., pulse position modulation), Pulse Repetition interval (PRI), scan repetition interval and the like. The new determined signal characteristic may be saved in a memory With reference to Figure 2, first signal characteristics determinator 214 and second signal characteristics determinator 224 determine new emitter signal characteristics and may further store said new determined signal characteristic in memory 220.

In step 356, at least the new determined emitter signal characteristics are transmitted to other receiver systems. However, all the signal characteristics or a selected portion thereof may also be transmitted to the other receiver systems. With reference to Figure 2, communications transmitter transmits, via communications antenna 228, the determined signal characteristics to other receiver systems.

It will be appreciated by persons skilled in the art that the disclosed technique is not limited to what has been particularly shown and described hereinabove. Rather the scope of the disclosed technique is defined only by the claims, which follow.

## Claims

1. A system (100) for detecting signals emitted by an emitter (112), said system comprising:
at least one receiver system (200) including:
at least one antenna (202) configured to receive electromagnetic radiation emitted by said emitter and to transform said received electromagnetic radiation into an electric received signal;
a receiver (203), coupled with said at least one antenna, said receiver configured to sample said electric received signal to produce real-time received signal samples;
a memory (220), coupled with said receiver, configured to store at least one signal characteristic relating to the radio signal transmitted by said emitter, said memory further configured to store previously acquired signal samples;
a detector (212), coupled with said receiver and with said memory, configured to attempt to detect a signal relating to an emitter from said real-time received signal samples, by employing said at least one stored signal characteristic relating to the radio signal transmitted by said emitter, said detector further configured to attempt to detect a signal relating to an emitter from said previously acquired signals samples at least according to at least one new signal characteristic, thereby improving the signal to noise ratio of said receiver system.

2. The system according to claim 1, wherein said at least one receiver system further includes: a signal characteristics determinator (214), coupled with said detector, configured to receive a detected signal from said detector and to determine said at least one new signal characteristic relating to the radio signal transmitted by said emitter;

3. The system according to claim 2, wherein said signal characteristics determinator is further coupled with said memory and configured to store said new determined signal characteristics in said memory.

4. The system according to claim 3, wherein said signal characteristics determinator is further configured to refine previously stored signal characteristics.

5. The system according to claim 1, wherein said at least one receiver system further includes a communications receiver (218), coupled with said memory, configured to receive at least one other signal characteristic and to store said received signal characteristic in said memory,
wherein said detector is further configured to employ said received at least one other signal characteristic when detecting a signal.

6. The system according to claim 5, further including a plurality of other ones of said at least one receiver system,
wherein, said at least one receiver system is configured to receive said at least one other signal characteristic for at least one of said other ones of said at least one receiver system.

7. The system according to claim 5, wherein each receiver system further includes:
a communications transmitter (226), coupled with said signal characteristics determinator, configured to transmit said at least one new signal characteristic to other ones of said receiver systems; and
wherein, said other ones of said receiver systems are configured to employ said at
least one new signal characteristic for detecting signals received thereby.

8. The system according to claim 7, wherein each of said receiver systems includes an antenna coupled with said receiver and at least one communications antenna coupled with said communications receiver and with said communications transmitter.

9. The system according to claim 7, wherein each of said receiver systems further includes another detector and another signal characteristics determinator, said another detector being coupled with said memory and with said another signal characteristics determinator,
wherein said detector is configured to attempt to detect said real-time received signal samples and said another detector is configured to attempt to detect said previously acquired signal samples, and
wherein said another signal characteristics determinator is configured to receive another detected signal from said another detector and to determine at least one new signal characteristic relating to the radio signal transmitted by said emitter.

10. The system according to claim 9, wherein said another signal characteristics determinator is further coupled with said communications transmitter, said communications transmitter being configured to transmit said new determined signal characteristics relating to said another detected signal to other ones of said receiver systems.

11. The system according to claim 1, wherein said stored signal characteristics are at least one of:
frequency;
phase;
matched filter mask;
pulse width;
the intra-pulse modulation scheme;
inter-pulse modulation scheme;
pulse repetition interval; and
scan repetition interval.

12. The system according to claim 1, wherein said receiver includes a direct sampler (268) for sampling said received electric signal.

13. The system according to claim 1, wherein said receiver includes:
a front end (204), coupled with said at least one antenna, at least for said received electric signal;
a local oscillator (206) for generating a reference signal;
a mixer (208), coupled with said front end and with said local oscillator, for multiplying the amplified received electric signal with said reference signal to down convert the frequency of said amplified received electric signal; and
an analog to digital converter (210), coupled with said mixer and with said detector, for sampling said down converted signal.

14. The system according to claim 1, wherein said receiver is configured to store said real-time sampled received signal in said memory.

15. The system according to claim 1, wherein said at least one signal characteristic is uploaded to said memory.

16. A method for detecting an emitter by a receiver system comprising the steps of:
acquiring a plurality of signal samples (350);
attempting to detect a signal relating to an emitter from real-time signal samples by employing at least one signal characteristic (352), **characterised by** further comprising the step of attempting to detect a signal relating to an emitter from previously acquired signal samples at least according to at least one new signal characteristic.

17. The method according to claim 16, wherein said step of attempting to detect a signal relating to an emitter further includes detecting a signal relating to an emitter from previously acquired signal samples, by employing said at least one signal characteristic relating to the radio signal transmitted by said emitter.

18. The method according to claim 16, further including the steps of:
determining at least one new emitter signal characteristic; and
transmitting the determined at least one new signal characteristic to other receiver systems,
wherein, said other receiver systems employ said new detected signal characteristics for detecting received signals thereby.

19. The method according to claim 16, wherein said signal characteristics are at least one of:
frequency;
phase;
matched filter mask;
pulse width;
the intra-pulse modulation scheme;
inter-pulse modulation scheme;
pulse repetition interval; and
scan repetition interval.

## Patentansprüche

1. System (100) zum Erfassen von Signalen, die von einem Emitter (112) ausgestrahlt werden, wobei das System umfasst:
mindestens ein Empfängersystem (200), enthaltend:
mindestens eine Antenne (202), die zum Empfangen elektromagnetischer Strahlung konfiguriert ist, die von dem Emitter ausgestrahlt wird, und zum Transformieren der empfangenen elektromagnetischen Strahlung in ein elektrisches Empfangssignal;
einen Empfänger (203), der mit mindestens einer Antenne verbunden ist, wobei der Empfänger konfiguriert ist, das elektrische Empfangssignal abzutasten, um Echtzeit-Empfangssignalabtastungen zu erzeugen;
einen Speicher (220), der mit dem Empfänger verbunden ist, konfiguriert, mindestens eine Signalcharakteristik zu speichern, die sich auf das Funksignal bezieht, das von dem Emitter gesendet wird, wobei der Speicher ferner konfiguriert ist, zuvor gewonnene Signalabtastungen zu speichern;
einen Detektor (212), der mit dem Empfänger und mit dem Speicher verbunden ist, konfiguriert, ein Erfassen eines Signals, das sich auf einen Emitter bezieht, aus den Echtzeit-Empfangssignalabtastungen durch Verwendung der mindestens einen gespeicherten Signalcharakteristik, die sich auf das Funksignal bezieht, das von dem Emitter gesendet wird, zu versuchen, wobei der Detektor ferner konfiguriert ist, ein Signal, das sich auf einen Emitter bezieht, aus den zuvor gewonnenen Signalabtastungen mindestens nach mindestens einer neuen Signalcharakteristik zu erfassen, wodurch das Signal/Rausch-Verhältnis des Empfängersystems verbessert wird.

2. System nach Anspruch 1, wobei der mindestens eine Empfängersystem ferner enthält:
einen Signalcharakteristikermittler (214), der mit dem Detektor verbunden ist, konfiguriert, ein vom Detektor erfasstes Signal zu empfangen und die mindestens eine neue Signalcharakteristik zu ermitteln, die sich auf das Funksignal bezieht, das von dem Emitter gesendet wird.

3. System nach Anspruch 2, wobei der Signalcharakteristikermittler ferner an den Speicher verbunden und konfiguriert ist, die neu ermittelte Signalcharakteristik im Speicher zu speichern.

4. System nach Anspruch 3, wobei der Signalcharakteristikermittler ferner konfiguriert ist, zuvor gespeicherte der Signalcharakteristika zu verfeinern.

5. System nach Anspruch 1, wobei das mindestens eine Empfangssystem ferner einen Kommunikationsempfänger (218) enthält, der mit dem Speicher verbunden ist, konfiguriert, mindestens eine weitere Signalcharakteristik zu empfangen und die empfangene Signalcharakteristik im Speicher zu speichern,
wobei der Detektor ferner konfiguriert ist, die empfangene, mindestens eine weitere Signalcharakteristik zu verwenden, wenn ein Signal erfasst wird.

6. System nach Anspruch 5, ferner enthaltend mehrere weitere des mindestens einen Empfangssystems,
wobei das mindestens eine Empfangssystem konfiguriert ist, die mindestens eine weitere Signalcharakteristik für mindestens eines der weiteren des mindestens einen Empfangssystems zu empfangen.

7. System nach Anspruch 5, wobei jedes Empfangssystem ferner enthält:
einen Kommunikationssender (226), der mit dem Signalcharakteristikermittler verbunden ist, konfiguriert, die mindestens eine neue Signalcharakteristik zu weiteren der Empfangssysteme zu senden; und
wobei die weiteren der Empfangssysteme konfiguriert sind, die mindestens eine neue Signalcharakteristik zum Erfassen von Signalen zu verwenden, die durch diese empfangen werden.

8. System nach Anspruch 7, wobei jedes der Empfangssysteme eine Antenne enthält, die mit dem Empfänger verbunden ist, und mindestens eine Kommunikationsantenne, die mit dem Kommunikationsempfänger und mit dem Kommunikationssender verbunden ist.

9. System nach Anspruch 8, wobei jedes der Empfangssysteme ferner einen weiteren Detektor und weiteren Signalcharakteristikermittler enthält, wobei der weitere Detektor mit dem Speicher und mit dem weiteren Signalcharakteristikermittler verbunden ist,
wobei der Detektor konfiguriert ist, ein Erfassen der Echtzeit-Empfangssignalabtastungen zu versuchen und der weitere Detektor konfiguriert ist, ein Erfassen der zuvor gewonnenen Signalabtastungen zu versuchen, und
wobei der weitere Signalcharakteristikermittler konfiguriert ist, ein weiteres erfasstes Signal von dem weiteren Detektor zu empfangen und mindestens eine neue Signalcharakteristik zu ermitteln, die sich auf das Funksignal bezieht, das von dem Emitter gesendet wird.

10. System nach Anspruch 9, wobei der weitere Signalcharakteristikermittler ferner mit dem Kommunikationssender verbunden ist, der Kommunikationssender konfiguriert ist, die neue ermittelte Signalcharakteristik, die sich auf das weitere erfasste Signal bezieht, zu anderen der Empfangssysteme zu senden.

11. System nach Anspruch 1, wobei die gespeicherten Signalcharakteristika mindestens eines sind von:
Frequenz;
Phase;
abgestimmter Filtermaske;
Pulsbreite;
Intra-Puls-Modulationsschema;
Inter-Puls-Modulationsschema;
Pulswiederholungsintervall; und
Abtastungswiederholungsintervall.

12. System nach Anspruch 1, wobei der Empfänger einen Direkt-Sampler (268) enthält, der das empfangene elektrische Signal abtastet.

13. System nach Anspruch 1, wobei der Empfänger enthält:
ein Front-Ende (204), das mit der mindestens einen Antenne mindestens für das empfangene elektrische Signal verbunden ist;
einen lokalen Oszillator (206) zum Generieren eines Referenzsignals;
einen Mischer (208), der mit dem Front-Ende und mit dem lokalen Oszillator verbunden ist, zum Vervielfachen des verstärkten empfangenen elektrischen Signals mit dem Referenzsignal zum Abwärtskonvertieren der Frequenz des verstärkten empfangenen elektrischen Signals; und
einen Analog/Digital-Wandler (210), der mit dem Mischer und mit dem Detektor verbunden ist, zum Abtasten des abwärtskonvertierten Signals.

14. System nach Anspruch 1, wobei der Empfänger konfiguriert ist, das Echtzeit-abgetastete Empfangssignal im Speicher zu speichern.

15. System nach Anspruch 1, wobei die mindestens eine Signalcharakteristik in den Speicher hochgeladen wird.

16. Verfahren zum Erfassen eines Emitters durch ein Empfangssystem, umfassend die Schritte:
Gewinnen von mehreren Signalabtastungen (350);
Versuchen, ein Signal, das sich auf einen Emitter bezieht, aus den Echtzeit-Empfangssignalabtastungen durch Verwendung mindestens einer Signalcharakteristik (352) zu erfassen, **dadurch gekennzeichnet, dass** es ferner den Schritt des Versuchens umfasst, ein Signal, das sich auf einen Emitter bezieht, aus zuvor gewonnenen Signalabtastungen mindestens nach mindestens einer neuen Signalcharakteristik zu erfassen.

17. Verfahren nach Anspruch 16, wobei der Schritt des Versuchens, ein Signal, das sich auf einen Emitter bezieht, zu erfassen, ferner ein Erfassen eines Signals enthält, das sich auf einen Emitter bezieht, aus zuvor gewonnenen Signalabtastungen durch Verwendung der mindestens einen Signalcharakteristik, die sich auf das Funksignal bezieht, das von dem Emitter gesendet wird.

18. Verfahren nach Anspruch 16, ferner enthaltend die Schritte:
Ermitteln mindestens einer neuen Signalcharakteristik; und
Senden der ermittelten mindestens einen neuen Signalcharakteristik zu anderen Empfangssystemen, wobei die anderen Empfangssysteme die neue erfasste Signalcharakteristik zum Erfassen von Empfangssignalen verwenden.

19. Verfahren nach Anspruch 16, wobei die Signalcharakteristika mindestens eines sind von:
Frequenz;
Phase;
abgestimmter Filtermaske;
Pulsbreite;
Intra-Puls-Modulationsschema;
Inter-Puls-Modulationsschema;
Pulswiederholungsintervall; und
Abtastungswiederholungsintervall.

## Revendications

1. Système (100) de détection de signaux émis par un émetteur (112), ledit système comprenant :
au moins un système de récepteur (200) comprenant :
au moins une antenne (202) configurée pour recevoir un rayonnement électromagnétique émis par ledit émetteur et pour transformer ledit rayonnement électromagnétique reçu en un signal électrique reçu ;
un récepteur (203), relié à ladite au moins une antenne, ledit récepteur étant configuré pour échantillonner ledit signal électrique reçu afin de produire des échantillons de signaux reçus en temps réel ;
une mémoire (220), reliée audit récepteur, configurée pour stocker au moins une caractéristique de signal relative au signal radio transmis par ledit émetteur, ladite mémoire étant en outre configurée pour stocker les échantillons de signaux précédemment acquis ;
un détecteur (212), relié audit récepteur et à ladite mémoire, configuré pour essayer de détecter un signal relatif à un émetteur à partir desdits échantillons de signaux reçus en temps réel, en utilisant ladite au moins une caractéristique de signal stockée relative au signal radio transmis par ledit émetteur, ledit détecteur étant en outre configuré pour essayer de détecter un signal relatif à un émetteur à partir desdits échantillons de signaux précédemment acquis au moins selon au moins une nouvelle caractéristique de signal, afin d'améliorer ainsi le rapport signal/bruit dudit système de récepteur.

2. Système selon la revendication 1, dans lequel ledit au moins un système de récepteur comprend en outre :
un déterminateur de caractéristiques de signal (214), relié audit détecteur, configuré pour recevoir un signal détecté provenant dudit détecteur et pour déterminer ladite au moins une nouvelle caractéristique de signal relative au signal radio transmis par ledit émetteur.

3. Système selon la revendication 2, dans lequel ledit déterminateur de caractéristiques de signal est en outre relié à ladite mémoire et configuré pour stocker lesdites nouvelles caractéristiques de signal déterminées dans ladite mémoire.

4. Système selon la revendication 3, dans lequel ledit déterminateur de caractéristiques de signal est en outre configuré pour redéfinir les caractéristiques de signal précédemment stockées.

5. Système selon la revendication 1, dans lequel ledit au moins un système de récepteur comprend en outre un récepteur de communications (218), relié à ladite mémoire, configuré pour recevoir au moins une autre caractéristique de signal et pour stocker ladite caractéristique de signal reçue dans ladite mémoire,
dans lequel ledit détecteur est en outre configuré pour utiliser ladite au moins une autre caractéristique de signal reçue lors de la détection d'un signal.

6. Système selon la revendication 5, comprenant en outre une pluralité d'autres dudit au moins un système de récepteur,
dans lequel ledit au moins un système de récepteur est configuré pour recevoir ladite au moins une autre caractéristique de signal destinée à au moins l'un desdits autres dudit au moins un système de récepteur.

7. Système selon la revendication 5, dans lequel chaque système de récepteur comprend en outre :
un transmetteur de communications (226), relié audit déterminateur de caractéristiques de signal, configuré pour transmettre ladite au moins une nouvelle caractéristique de signal aux autres desdits systèmes de récepteurs ; et
dans lequel lesdits autres desdits systèmes de récepteurs sont configurés pour utiliser ladite au moins une nouvelle caractéristique de signal afin de détecter les signaux ainsi reçus.

8. Système selon la revendication 7, dans lequel chacun desdits systèmes de récepteurs comprend une antenne reliée audit récepteur et au moins une antenne de communications reliée audit récepteur de communications et audit transmetteur de communications.

9. Système selon la revendication 7, dans lequel chacun desdits systèmes de récepteurs comprend en outre un autre détecteur et un autre déterminateur de caractéristiques de signal, ledit autre détecteur étant relié à ladite mémoire et audit autre déterminateur de caractéristiques de signal,
dans lequel ledit détecteur est configuré pour essayer de détecter lesdits échantillons de signaux reçus en temps réel, et ledit autre détecteur est configuré pour essayer de détecter lesdits échantillons de signaux précédemment acquis, et
dans lequel ledit autre déterminateur de caractéristiques de signal est configuré pour recevoir un autre signal détecté provenant dudit autre détecteur et pour déterminer au moins une nouvelle caractéristique de signal relative au signal radio transmis par ledit émetteur.

10. Système selon la revendication 9, dans lequel ledit autre déterminateur de caractéristiques de signal est en outre relié audit transmetteur de communications, ledit transmetteur de communications étant configuré pour transmettre lesdites nouvelles caractéristiques de signal déterminées relatives audit autre signal détecté aux autres desdits systèmes de récepteurs.

11. Système selon la revendication 1, dans lequel lesdites caractéristiques de signal stockées sont au moins l'une :
d'une fréquence ;
d'une phase ;
d'un masque filtrant adapté ;
d'une durée d'impulsion ;
d'un modèle de modulation d'intra-impulsions ;
d'un modèle de modulation d'inter-impulsions ;
d'un intervalle de répétition d'impulsions ; et
d'un intervalle de répétition de balayage.

12. Système selon la revendication 1, dans lequel ledit récepteur comprend un échantillonneur direct (268) destiné à échantillonner ledit signal électrique reçu.

13. Système selon la revendication 1, dans lequel ledit récepteur comprend :
une extrémité avant (204), reliée à ladite au moins une antenne, au moins pour ledit signal électrique reçu ;
un oscillateur local (206) destiné à générer un signal de référence ;
un mélangeur (208), relié à ladite extrémité avant et audit oscillateur local, destiné à multiplier le signal électrique reçu amplifié avec ledit signal de référence afin de convertir à la baisse la fréquence dudit signal électrique reçu amplifié ; et
un convertisseur analogique-numérique (210), relié audit mélangeur et audit détecteur, destiné à échantillonner ledit signal converti à la baisse.

14. Système selon la revendication 1, dans lequel ledit récepteur est configuré pour stocker ledit signal reçu échantillonné en temps réel dans ladite mémoire.

15. Système selon la revendication 1, dans lequel ladite au moins une caractéristique de signal est envoyée vers ladite mémoire.

16. Procédé de détection d'un émetteur par un système de récepteur comprenant les étapes de :
acquisition d'une pluralité d'échantillons de signaux (350) ;
tentative de détection d'un signal relatif à un émetteur à partir des échantillons de signaux en temps réel en utilisant au moins une caractéristique de signal (352), **caractérisé en ce qu'**il comprend en outre l'étape de tentative de détection d'un signal relatif à un émetteur à partir des échantillons de signaux précédemment acquis au moins en fonction d'au moins une nouvelle caractéristique de signal.

17. Procédé selon la revendication 16, dans lequel ladite étape de tentative de détection d'un signal relatif à un émetteur comprend en outre la détection d'un signal relatif à un émetteur à partir des échantillons de signaux précédemment acquis, en utilisant ladite au moins une caractéristique de signal relative au signal radio transmis par ledit émetteur.

18. Système selon la revendication 16, comprenant en outre les étapes de :
détermination d'au moins une nouvelle caractéristique de signal d'émetteur ; et
de transmission de la au moins une nouvelle caractéristique de signal déterminée à d'autres systèmes de récepteurs,
dans lequel lesdits autres systèmes de récepteurs utilisent lesdites nouvelles caractéristiques de signaux détectées afin de détecter les signaux ainsi reçus.

19. Système selon la revendication 16, dans lequel lesdites caractéristiques de signaux sont au moins l'une :
d'une fréquence ;
d'une phase ;
d'un masque filtrant adapté ;
d'une durée d'impulsion ;
d'un modèle de modulation d'intra-impulsions ;
d'un modèle de modulation d'inter-impulsions ;
d'un intervalle de répétition d'impulsions ; et
d'un intervalle de répétition de balayage.
